# EUROPEAN PATENT APPLICATION

(11) **EP 1 609 816 A1**
(43) Date of publication of application: **28.12.2005**
(21) Application number: 04102966.1
(22) Date of filing: 25.06.2004
(51) Int. Cl.: C08K 3/22, B32B 27/32

(54) **Masterbatch Composition containing nano scalar zinc oxide for the production of transparent polyolefin films with UV-barrier properties**

(71) Applicant: A. SCHULMAN PLASTICS, 2880 Bornem (BE)
(72) Inventor: Janssens, Marcel, 9200, Dendermonde (BE); Daponte, Tony, 2070, Zwijndrecht (BE)
(74) Representative: Luys, Marie-José A.H.

(57) **Abstract**

The invention relates to a polymer composition which is used as a masterbatch comprising polyolefin and 10 to 80 wt-% nano scalar zinc oxide having a particle size between 1 and 100 nm. The invention further relates to a film made from this masterbatch and to a method for manufacturing said film.

## Description

The invention relates to a polymer composition which is used as a masterbatch in a polymer composition used for manufacturing polyolefin films with excellent UV barrier properties and high transparency, to films made from this polymer composition and to a method for manufacturing the polyolefin film.

Transparent polymeric films are used as packaging material for food products. In the past metallised or opaque films were used for packaging perishable foods like fat containing foods, vegetables, foods made from milk and fruits. However, the use of opaque or metallised films has the disadvantage that the packed foods are not visible for the customer when buying the product.

Therefore transparent films are used for food packaging. However, if transparent films are used as packing material it is important to protect the packed food from being exposed to the ultra-violet light which is present in the sunlight to about 6 %. This UV light damages, for example, vitamins and unsaturated fatty-acids present in food stuffs like milk, yoghurt, meat etc. In the case of snack foods it is known that these foods have a limited shelf life. This limited shelf life is believed to be caused in a substantial part by the exposure of the food product to ultra-violet light which is able to penetrate through the wrapping and consequently comes into contact with the product.

A further problem is, for example, the change in colour of film-packed meat, like for example, packed smoked ham. Furthermore the UV-barrier properties also protect the colour printing inks of film books from fading as well as the lignin-darkening of the paper.

In general, polyolefin packing films with UV-barrier properties are used today in order to protect the packaged goods against the damaging effects of UV-A and UV-B light present in the sunlight.

In order to solve this problem, organic UV absorbers like benzophenones and benzotriazoles have been used in the past. The disadvantage of these additives is that they have to be used in high amounts to give an efficient UV protection. For the use in biaxial oriented polypropylene films having a thickness lower than 100 micrometer the additives are not sufficient to absorb the UV light. For an effective UV absorption the concentration of these substances has to be around 1 %, which is so high, that the resulting films shows blooming effects and the additives are blooming out of the polymer matrix causing welding problems and powder deposits on the film surface. Thus it can not be excluded that the additive will contaminate the packed food product. Therefore such additives should not be used in the field of food packaging.

US 5,391,609 describes a transparent polymeric film which provides a barrier to the transmission of ultra violet light and can be used for packaging foods. This film contains as an additive titanium dioxide particles having an average particle size less than the wave length of visible light and greater than the wavelength of ultra violet light. The average size of the titanium dioxide particles is from 0.01 micrometer to 0.05 micrometer and preferably from 0.018 micrometer to 0.040 micrometer. By using this additive a polymeric film can be produced having high UV barrier properties against the transmission of ultra violet light and providing high transparency.

In a preferred embodiment titanium dioxide is added to a first polymeric material to provide a masterbatch which is added to a second polymeric material to provide an extrudable grade of resin. Then the extrudable resin is formed as a film.

A further development is described in WO 03/099911 A1. This document describes transparent polyolefin films having UV barrier properties. These films contain nano scalar titanium dioxide in an amount from 0.5 to 1.5 % by weight with regard to the total weight of the film. The nano scalar titanium dioxide has an average particle size of lower than 30 nm and preferably between 15 and 20 nm. This particle size is similar to the one described in US 5,391,609. Furthermore the titanium dioxide particles described in WO 03/099911 are coated on their surface with an organic or inorganic coating like alumina or stearic acid. Compared to US 5,391,609 the coating avoids an agglomeration of the nano scalar titanium dioxide particles and therefore allows a better distribution in the film.

UV light consists of two different wavelengths. The wavelength of UVA light is from 320 to 400 nm and for UVB light from 280 to 320 nm. When using nano scalar titanium dioxide the UV light is only blocked to about 320 nm, which means that only the UVB light is absorbed. However, the UVA light is not absorbed by titanium dioxide so that UV barrier properties, especially against UVA light, are not sufficient.

Furthermore, as can be seen from the comparative examples of WO 03/099911 a re-agglomeration of titanium dioxide particles takes place so that the final haze and UV barrier properties of the films are reduced considerably. This can only be avoided by using a coating for the titanium dioxide particles with an additional process step which makes the whole method more expensive.

In the past also zinc oxide particles of around 1 micrometer have been used as these particles can also block UVA light to about 370 nm. However, the use of these zinc oxide particles has the disadvantage of giving only translucent films which are not transparent enough to observe the quality of the packed goods. Therefore, the use of titanium dioxide particles succeeded over the use of zinc oxide particles, as a transparent film enables the customer to see the product he is buying.

Therefore it was the technical object of the present invention to provide a polyolefin film having UV barrier properties for UVA and UVB light, and nevertheless having high transparency. Furthermore, the film should neither show any blooming of the used additive nor powder deposits on the film surface.

This technical object is solved by a polymer composition which is used as a masterbatch comprising polyolefin and 1 - 80 wt.-% nano scalar zinc oxide having a particle size between 1 and 100 nm, preferably 10 - 40 nm and most preferred 25 to 35 nm.

As polymer it is preferred to use polyolefin selected from the group consisting of low density polyethylene, high density polyethylene, linear low density polyethylene, homopolymer-polypropylene-, blockcopolymer-polypropylene, random copolymer polypropylene, ethylene copolymers, ethylene ionomers and mixtures thereof. In a preferred embodiment as ethylene copolymers EVA, EMA, EBA, EEA, EAA and their ionomers can be used.

It is not necessary that nano scalar zinc oxide is coated with organic and/or inorganic substances as described in the reference WO 03/099911 A1 in order to get a homogeneous distribution in the polymer film. It was found that the nano scalar zinc oxide is able to block 100 % of the UV A and UV B light and that it well disperses into nano particles without agglomerations.

The polymer composition is first produced as a masterbatch using high-shear compounding equipment such as Banburry mixer, ZSK twin screw mega compounder (Couperion), and a Buss-co-kneader. Normally the masterbatch is produced with a concentration of the nano scalar zinc oxide obtained to 80 %, preferably 30 to 60 % and most preferred 50 % relating to the whole polymer composition. For producing the polymer film this masterbatch is further diluted with a base polymer into an extrudable polyolefin resin at about 1 to 20 % of the whole composition.

In a preferred embodiment the zinc oxide particles have a specific surface area between 30 and 40 m²/g. A masterbatch is diluted, depending on the thickness of the final film, into a polyolefin resin such as low and high density polyethylene, linear low density polyethylene, linear low density polyethylene, homopolymer blockcopolymer and random copolymer polypropylene, ethylene copolymers like EVA (ethylene vinyl acetate), EMA (ethylene methyl acrylate), EBA (ethylene butyl acrylate), EEA (ethylene ethyl acrylate) EAA (ethylene acrylic acid) and its ionomers. These are the regular commercial polymers as known in the industry.

The film can have a thickness of 5 to 200 micrometer and can be made out of 1, 2, 3, 4 or even more layers. Therefore, a further object of the present invention is a polyolefin film with high transparency for visible light and high UV absorbency, comprising 0.01 to 5 wt. %, preferably 0.05 to 3 wt.-% nano scalar zinc oxide as described above.

This polyolefin film can be a mono-oriented or a bi-axially oriented film. The zinc oxide is at least present in one layer of the film. However, it can also be present in every layer of the film or in more than one layer.

Furthermore, the film can additionally contain regular additives such as slip agents, anti-blocking agents, anti-static agents, anti-oxidants, and neutralising agents. These additives should neither have an influence on the dispersion of the masterbatch nor on the UV barrier properties or on the optical properties of the films produced with the masterbatch.

If the polyolefin film is a multi-layer film it contains a core layer and one or two sealing layers covering the core layer. Optionally between the core and the sealing layer one or two additional intermediate layers can be present. No r-mally, the core layer has the largest thickness with about 50 to 99 % of the total thickness of the film. In general it is preferred that the UV barrier additive is present in the core layer but can be also added in the skin layers and/or in the inter-mediate layers.

Polyolefin films were produced from the polymer composition according to the invention and compared with polyolefin films containing nano scalar titanium dioxide as well as micro scalar zinc oxide. It was found that the polyolefin films according to the invention containing nano scalar zinc oxide have superior UV barrier properties as well as a superior optical transparency and lower haze properties.

The following examples explain the invention in more detail. All amounts in the examples are specified in wt-%.

### EXAMPLES

### Example 1

### Monolayer LDPE film

A monolayer LDPE blown film with a thickness of 100 micrometer has been made using a 50 % nano scalar zinc oxide concentrate which was compounded on a ZSK 25 mega compounder and based on LDPE. In comparison, a concentrate was produced containing 20 % nano scalar titanium dioxide and was based on the same LDPE and also another LDPE based 50 % micro scalar zinc oxide concentrate with a particle size of 1 micrometer.

Due to the high specific surface of the nano scalar titanium dioxide, the maximum loading was limited to 20 % in LDPE.

In order to obtain a film with 60 % UV barrier the following compositions of table 1 were used.

**Table 1**

| Film of 100 micrometer LDPE | UV Barrier until | Haze (%) | Masterbatch Addition in film for 60 % UV Barrier |
|---|---|---|---|
| natural | none | 9.5 | none |
| + MB1 | 320 nm | 26 | 1.2 % |
| + MB2 | 380 nm | 48 | 0.8 % |
| + MB3 | 380 nm | 15 | 0.2 % |

### .Example 2

### Bi-oriented and co-extruded polypropylene films

A bi-oriented and co-extruded polypropylene film, having a core layer of 18 micrometer and 2 sealing layers of 1 micrometer, and a 95 % UV barrier property, was made on a state-of-the-art Brückner Stenter Line, as known in the industry. No. 1 is a natural polypropylene film without UV barrier pigment. No. 2 is the same film but containing the 20 % concentrate of nano scalar titanium dioxide. No. 3 is the same film but containing the 50% concentrate of nano scalar zinc oxide.

**Table 2**

| 20 micrometer BOPP film | UV Barrier until | Haze (%) | Masterbatch Addition for 95 % UV barrier |
|---|---|---|---|
| natural | none | 1.2 | none |
| + MB 1 | 320 nm | 7.8 | 22 % |
| +MB2 | 380 nm | 13.6 | 18% |
| +MB3 | 380 nm | 4.0 | 6% |

- Haze in table 1 and 2 is measured according ASTM D 1003
- MB1 MB2, MB3 in table 1 and 2 have the following composition:

- MB1 Masterbatch based on LDPE containing 20 % nano scalar TiO_{2.}
   MB2 Masterbatch based on LDPE containing 50 % micro scalar ZnO.
   MB 3 Masterbatch based on LDPE containing 50 % nano scalar ZnO
- UV Barrier properties in table 1 and 2 are measured with a UV-VIS spectrophotometer of Shimadzu.

It is shown very clearly that the films containing the masterbatch with the nano scalar zinc oxide have much better UV barrier and optical properties than the films containing the nano scalar TiO₂ and the micro scalar zinc oxide.

## Claims

1. Polymer composition which is used as a masterbatch comprising polyolefin and 10 to 80 wt-% nano scalar zinc oxide having a particle size between 1 and 100 nm.

2. Polymer composition according to claim 1, wherein the particle size is 10 to 40 nm.

3. Polymer composition according to claim 1 or 2, wherein the particle size is 25 to 35 nm.

4. Polymer composition according to anyone of claims 1 to 3, wherein the polyolefin is selected from the group consisting of low density polyethylene, high density polyethylene, linear low density polyethylene, homopolymer-polypropylene, blockcopolymer polypropylene, random copolymer polypropylene, ethylene copolymers, ethylene ionomers and mixtures thereof.

5. Polymer composition according to anyone of claims 1 to 4, wherein the polymer composition is diluted into an extrudable polyolefin resin at 1 to 20 wt-% of the whole composition.

6. Polyolefin film having a high transparency for visible light and high UV absorbance comprising 0.01 to 5 wt-% nano scalar zinc oxide having a particle size between 1 and 100nm.

7. Polyolefin film according to claim 6, wherein the film is a mono-oriented or a biaxially-oriented film.

8. Polyolefin film according to claim 6 or 7, wherein the film has 1, 2, 3, 4, 5, or more layers.

9. Polyolefin film according to anyone of claims 6 to 8, wherein the nano scalar zinc oxide is present in at least one layer of the film.

10. Polyolefin film according to anyone of claims 6 to 9, wherein the film has a thickness of 5 to 200 micrometer.

11. Method for manufacturing the polyolefin film according to anyone of claims 6 to 10, wherein
a) Nano scalar Zinc oxide is mixed with a polyolefin composition to provide a masterbatch
b) the masterbatch is diluted with a polyolefin resin to produce an extrudable resin
c) a transparent film is formed from the extrudable resin

12. Method according to claim 11, wherein the film is formed using film blowing or film casting.
